# EUROPÄISCHE PATENTANMELDUNG

(11) **EP 0 566 908 A2**
(43) Veröffentlichungstag der Anmeldung: **27.10.1993**
(21) Anmeldenummer: 93105385.4
(22) Anmeldetag: 01.04.1993
(51) Int. Cl.: B01D 33/06, B23Q 11/10, B01D 29/15, B01D 35/16

(54) **Flüssigkeitsfilter**

(30) Priorität: 22.04.1992 DE 4213200
(71) Anmelder: Kümmerle, Bruno, D-72649 Wolfschlugen (DE)
(72) Erfinder: Kümmerle, Bruno, D-72649 Wolfschlugen (DE)
(74) Vertreter: Kratzsch, Volkhard, Dipl.-Ing.

(57) **Zusammenfassung**

Die Erfindung betrifft einen Flüssigkeitsfilter mit einem Gehäuse (18) mit Filterkammer (19), innerhalb der eine liegende Trommel (25) drehbar gehalten ist, die ein dem Trommelumfang folgendes Stützteil (31) und ein auf dem Stützteil (31) aufliegendes Filterelement (32) aufweist und die das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist. Das Stützteil (31) erstreckt sich in Umfangsrichtung über den ganzen Trommelumfang und ist fester Bestandteil der Trommel (25). Das Filterelement (32) ist als zylindrischer Trommelmantel (38) und hierbei als Dauerfilterelement ausgebildet und fest, jedoch auswechselbar, mit der Trommel (25) verbunden. Der Trommel (25) ist eine Antriebseinrichtung (40) zum umlaufenden Drehantrieb zugeordnet. Ferner sind eine die abgefilterten Partikel austragende Austrageinrichtung (50), eine den Trommelmantel (38) reinigende Abstreifeinrichtung (60) und im Trommelinneren eine Reinigungseinrichtung (70) vorgesehen, die zum Reinigen des Trommelmantels (38) mit einer Druckflüssigkeit speisbar ist.

## Beschreibung

Die Erfindung bezieht sich auf einen Flüssigkeitsfilter, insbesondere für Kühl-, Schmier- und/oder Bearbeitungsmedien, z.B. für Werkzeugmaschinen, Bearbeitungszentren oder dergleichen Produktionsmaschinen, der ansonsten im Oberbegriff des Anspruchs 1 definierten Art.

Es sind Flüssigkeitsfilter dieser Art bekannt (DE-GM 82 04 275), bei denen das Stützteil aus einem über Umlenkrollen und über die Trommel hinweggeführten Endlosband in Form eines Drahtmaschen- oder Gitterbandes besteht, das von einer Antriebseinrichtung angetrieben wird. Das Filterelement besteht aus einer auf dem Endlosband aufliegenden und geführten Filtermatte, die aus einem Filtervlies besteht und von einer drehbar gelagerten Vorratsrolle über eine Umlenkwalze abgezogen und um die Trommel herumgeführt ist bis hin zu einem Schlammkasten, in den die verbrauchte, gesättigte und mit abgefilterten Verunreinigungen versehene Filtermatte in Abschnitten und z.B. absatzweise abgegeben wird. Die verbrauchten Abschnitte der Filtermatte werden in diesem Schlammkasten gesammelt und mit diesem von Zeit zu Zeit abtransportiert.

Der Flüssigkeitsfilter ist aufwendig, zum einen aufgrund des relativ langen und kostenaufwendigen, das Stützteil bildenden Endlosbandes, zusätzlich jedoch vor allem wegen des Filterelements in Form der sich verbrauchenden Filtermatte. Diese Filtermatten werden als Rollen bereitgestellt und von den Rollen abgezogen . Ist eine solche Filtermatte verbraucht, so muß eine neue Rolle eingesetzt werden. Dies bedeutet eine Unterbrechung und ist im übrigen mitunter unbequem und beschwerlich. Ein weiterer erheblicher Nachteil liegt darin, daß das sich verbrauchende Filterelement, das mit abgefilterten Partikeln durchsetzt und bedeckt ist, entfernt und hiernach entsorgt werden muß und erhebliche Schwierigkeiten bei der Entsorgung mit sich bringt, weil es sich um mit allen möglichen Partikeln und Schmutz durchsetztes Material handelt, das nicht aufbereitbar, nicht wiederverwendbar und auch nicht deponiefähig ist. Auch ergeben sich Umstellungsprobleme des Flüssigkeitsfilters dann, wenn die Maschine, deren Medium zu filtern ist, hinsichtlich der zu bearbeitenden Werkstücke auf solche anderen Materials umgestellt wird, z.B. statt Gußwerkstücken nunmehr Stahl- oder Aluminiumwerkstücke bearbeitet werden sollen. Dann ergeben sich auf dem Filterelement in Form des Filtervlieses als abzufilternde Partikel solche aus verschiedenen Metallen, zunächst Gußpartikel und dann auf dem gleichen Filterabschnitt und/oder auf den nächstfolgenden Filterabschnitten des Filtervlieses Partikel des anderen bearbeiteten Werkstoffes. Eine Filtermatte mit einer solchen Vielzahl von darauf vermischten abgelagerten Partikeln macht noch größere Schwierigkeiten bei der Entsorgung.

Der Erfindung liegt die Aufgabe zugrunde, einen Flüssigkeitsfilter der im Oberbegriff des Anspruchs 1 genannten Art zu schaffen, der hinsichtlich des Filterelementes einfacher und kostengünstiger ist und keine Entsorgungsprobleme aufwirft.

Die Aufgabe ist bei einem Flüssigekeitsfilter der im Oberbegriff des Anspruchs 1 genannten Art erfindungsgemäß durch die Merkmale im Kennzeichnungsteil des Anspruchs 1 gelöst. Der sich über den gesamten Trommelumfang erstreckende Stützteil in Form eines festen Bestandteils der Trommel kann aus in Umfangsrichtung beabstandeten Tragstäben, einem etwa zylindrischen Tragnetz, Traggitter oder in einfacher Weise aus einem Trommelmantel bestehen und ist dadurch einfach und kostengünstig. Er verleiht der Trommel ausreichende Festigkeit. Das auf dem Stützteil sitzende und abgestützte, mit der Trommel, z.B. dem Stützteil, fest verbundene, vorzugsweise aber lösbare und auswechselbare Filterelement in Gestalt eines zylindrischen Trommelmantels hat vielfältige Vorteile. Es eröffnet die Möglichkeit der Ausbildung als Dauerfilterelement und ist somit wesentlich kostengünstüger als ein sich verbrauchendes Filterelement in Form eines von einer Vorratsrolle abgezogenen und umlaufend geführten und z.B. absatzweise bei Verunreinigung ausgetragenen Filtervlieses. Es entfällt somit dieses sich verbrauchende Filtervlies, wodurch Kosten und auch Zeit gespart werden, die sonst für den Wechsel einer neuen Filterrolle notwendig ist. Von Vorteil ist ferner, daß der Flüssigkeitsfilter dadurch kompakter gestaltet werden kann, da für die Zuführung und Abführung der Filtermatte sonst benötigte Wege, auch Umlenkstellen und Umlenkglieder, entfallen. Ein weiterer wesentlicher Vorteil liegt darin, daß beim Flüssigkeitsfilter gemäß der Erfindung lediglich vom Trommelmantel abgefilterte Schmutzpartikel anfallen, die für sich relativ einfach, auch getrennt, aufgefangen und abtransportiert und vor allem aufbereitet, wiederverwertet oder deponiert werden können, da es sich bei diesem abgefilterten Schmutz um deponiefähige, aufbereitbare oder auch anderweitig verwendbar Materialien handelt, die keine Entsorgungsprobleme aufwerfen. Aufgrund der Lösbarkeit und Auswechselbarkeit des Filterelements sind ein Ersatz dieses oder eine Änderung der Filterfeinheit möglich.

Weitere vorteilhafte Erfindungsmerkmale ergeben sich aus den Ansprüchen 2 bis 13. Ein solcher Trommelmantel als Dauerfilterelement ist einfach, kostengünstig und dauerhaft einsetzbar. Ferner ist der Trommelmantel auf seiner Außenfläche z.B. durch Kratzbewegung, Abstreifen od.dgl . reinigbar, ohne daß der Trommelmantel dabei Schaden nimmt. Von Vorteil ist ferner, daß der Trommelmantel auch einer Reinigung mittels eines gasförmigen oder flüssigen Druckmittels ohne die Gefahr einer Beschädigung oder Zerstörung zugänglich ist, das quer zum Trommelmantelverlauf durch diesen hindurch gedrückt werden kann. Damit ist der als Dauerfilterelement ausgebildete Trommelmantel auch einer Reinigung im Betrieb zugänglich, ebenfalls ohne die Gefahr einer Beschädigung oder Zerstörung. Von Vorteil ist ferner, daß der Trommelmantel bedarfsweise schnell und einfach gegen einen anderen Trommelmantel ausgetauscht werden kann, in dem über das Stützteil, insbesondere in Form eines Zylindermantels, der Trommel schnell und einfach ein neuer zylinrischer Trommelmantel übergezogen wird. Ist der Auslaß so tief wie möglich angeordnet, ist ein möglichst vollständiges Leerlaufen der Reinkammer erreichbar.

Eine weitere eigenständige Lösung der zugrundegelegten Aufgabe ergibt sich aus dem eigenständigen Anspruch 14. Eine derartige Antriebseinrichtung ist einfach und kostengünstig und benötigt aufgrund der besonderen Gestaltung der Trommel wenig Platz, so daß der Flüssigkeitsfilter kompakt und platzsparend gestaltet werden kann. Weitere vorteilhafte Erfindungsmerkmale und Ausgestaltungen dazu ergeben sich aus den Ansprüchen 15 bis 22.

Eine weitere eigenständige Erfindungslösung ergibt sich aus dem eigenständigen Anspruch 23. Eine solche Austrageinrichtung ist aufgrund des standfesten Trommelmantels, insbesondere in Form eines Dauerfilterelements, möglich, ohne daß durch Beaufschlagung des Trommelmantels die Gefahr einer Beschädigung oder Zerstörung dieses Filterelements besteht. Die Austrageinrichtung ist in der Lage, Partikel, die auf der Außenfläche des Trommelmantels sich ansammeln, sowie von dem Trommelmantel entfernte Partikel, die in die Schmutzkammer gespült werden und sich dort absetzen, aus der Filterkammer und aus dem filtergehäuse abzutransportieren und auszutragen und z.B. bis zu einer Sammelkammer zu führen, in der diese Partikel aufgenommen werden. Vorteilhafte weitere Erfindungsmerkmale und Ausgestaltungen dazu ergeben sich aus den Ansprüchen 24 bis 28. In besonders einfacher Gestaltung können hierbei getriebliche Übertragungsteile der Antriebseinrichtung zugleich als Teile der Austrageinrichtung genutzt werden, was ebenfalls zu geringen Kosten und zu einer kompakten Gestaltung führt.

Eine weitere eigenständige Erfindungslösung ergibt sich aus dem eigenständigen Anspruch 29. Eine derartige Abstreifeinrichtung ist ebenfalls durch das besondere Filterelement in Gestalt des Trommelmantels möglich, wobei die diesen Trommelmantel abstreifend beaufschlagende Abstreifeinrichtung aufgrund der Gestaltung des Trommelmantels nicht die Gefahr einer Beschädigung oder Zerstörung dieses so gearteten Filterelements mit sich bringt. Aufgrund dieses Filterelements ist somit eine Abstreifung von Schmutzpartikeln von der Außenfläche möglich, wodurch ein Schmutzstau verhindert und die Filteroberfläche von großen Schmutzteilen ständig gesäubert wird. Weitere vorteilhafte Erfindungsmerkmale und Ausgestaltungen dazu ergeben sich aus den Ansprüchen 30 bis 32. Aufgrund der örtlichen Anordnung werden mittels der Abstreifeinrichtung von der Filteroberfläche entfernte Schmutzteile im Bereich der Austrageinrichtung abgestreift und auf diese zum Austrag übergeben.

Eine weitere eigenständige Erfindungslösung enthält Anspruch 33 mit vorteilhaften Weiterbildungen dazu gemäß den Ansprüchen 34 bis 36. Auf diese Weise sind die Schmutzkammer einerseits und die Reinkammer andererseits raumsparend unmittelbar nebeneinander plaziert und dennoch voneinander getrennt, was ebenfalls zu der kompakten Bauweise des Filters führt. Dadurch, daß der Boden, der die Schmutzkammer bodenseitig abschließt, zugleich als Leitwand und Funktionsteil der Austrageinrichtung gestaltet ist, ist ebenfalls eine kostengünstige und kompakte, möglichst einfache Bauweise verwirklichbar.

Eine weitere eigenständige Erfindungslösung ergibt sich aus dem eigenständigen Anspruch 37. Vorteilhafte weitere Erfindungsmerkmale und Ausgestaltungen dazu enthalten die Ansprüche 38 bis 47.

Aufgrund dieser Reinigungseinrichtung, die in besonders einfacher Weise innerhalb der Trommel plaziert werden kann, ist jederzeit bedarfsweise eine Reinigung des Filterelements in Gestalt des Trommelmantels vom Inneren her möglich, wobei die dadurch von der Außenfläche des Trommelmantels entfernten Schmutzpartikel wieder zurück in die Schmutzkammer gelangen und vermieden ist, daß dadurch etwa in der Reinkammer befindliches, bereits gefiltertes Medium verunreinigt wird.

Eine weitere eigenständige Erfindungslösung ergibt sich aus dem eigenständigen Anspruch 48. Vorteilhafte Erfindungsmerkmale und Ausgestaltungen dazu enthalten die Ansprüche 49 bis 61. Der je nach Bedarf in die Trommel z.B. von einer Axialseite her einbringbare Hohlkörper macht eine Nachrüstung des Flüssigkeitsfilters auf eine solche Version möglich, bei der die Filterwirkung durch zusätzlichen Unterdruck, erzeugt über den Hohlkörper, erheblich gesteigert werden kann. Bei eingesetztem Hohlkörper und Vakuumbetrieb ist der Flüssigkeitsfilter auch für höhere Viskositäten einsetzbar, so daß auch Medien mit höherer Viskosität gefiltert werden können. Ferner sind höhere Duzchsätze erreichbar. Der Hohlkörper ist z.B. von einer Axialseite der Trommel her in das Trommelinnere einsetzbar und sodann in vertikaler Richtung absenkbar, so daß er sich z.B. etwa im unteren Drittel des inneren Umfangsbereichs der Trommel befindet. Mit einem Ende kann der Hohlkörper am Trommelende, z.B. einer dortigen Stirnwand, axial festgelegt werden, während das andere Ende des Hohlkörpers z.B. an einem speichenlosen Tragring der Trommel axial festgelegt wird. Der Hohlkörper kann mit einer Wandung, die einem Zylindermantelsegment entspricht, von innen her dicht an dem Trommelumfang anliegen, so daß zwischen dieser Wandung und der davon überdeckten inneren Umfangsfläche der Trommel eine mit dem Inneren des Hohlkörpers in Verbindung stehende Kammer gebildet ist. Wird das Innere des Hohlkörpers mit einem Vakuum beaufschlagt, so verteilt sich dieses Vakuum über die mindestens eine Öffnung in der Wandung über den Kammerbereich, der zwischen der Wandung des Hohlkörpers und dem davon überdeckten Trommelumfang gebildet ist, so daß unter der Wirkung dieses Vakuums in erheblich stärkerem Maße zu filterende Flüssigkeit durch das Filterelement der Trommel hindurch gefördert wird. Soll der Flüssigkeitsfilter mit diesem Hohlkörper und für eine Vakuumabsaugung nachgerüstet werden, so wird der Hohlkörper mitsamt einer diesen haltenden Halteeinrichtung herangeführt und im Trommelinneren angebracht und hiernach mittels der Betätigungseinrichtung von innen her an den Trommelumfang angepreßt. Bei Nichtbedarf wird der Hohlkörper mittels der Betätigungseinrichtung gegensinnig abgehoben und hiernach mitsamt der Halteeinrichtung und Betätigungseinrichtung entfernt.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische, teilweise geschnittene perspektivische Ansicht eines Flüssigkeitsfilters, stark vereinfacht,
- Fig. 2: eine schematische Seitenansicht des Flüssigkeitsfilters in Fig. 1,
- Fig. 3: einen schematischen Schnitt eines Teils des Flüssigkeitsfilters entlang der Linie III-III in Fig. 2,
- Fig. 4: eine Draufsicht eines Teils des einen Trommelmantel bildenden Filterelements,
- Fig. 5: eine schematische, teilweise geschnittene perspektivische Ansicht des Flüssigkeitsfilters in Fig. 1, der mit einem Hohlkörper zur Vakuumabsaugung nachgerüstet ist,
- Fig. 6: einen schematischen vertikalen Schnitt der Trommel mit dem Hohlkörper in Fig. 5.

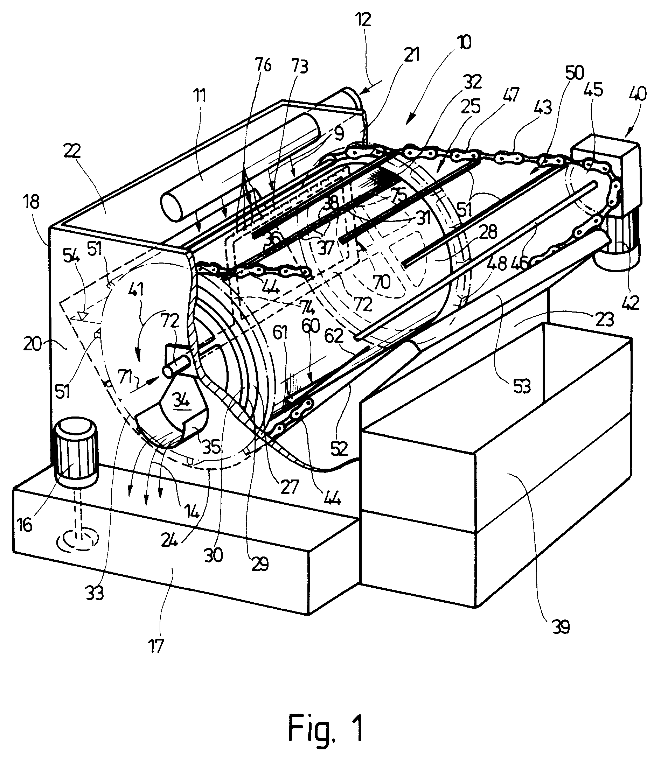

Der in Fig. 1 - 4 gezeigte Flüssigkeitsfilter 10 dient als komplette, so handelbare Baueinheit zum Filtern von Kühl-, Schmier- und/oder Bearbeitungsmedien, z.B. für Werkzeugmaschinen, Bearbeitungszentrum od.dgl. Produktionsmaschinen. Bei derartigen Medien handelt es sich z.B. um Kühlemulsionen oder Schneidöle oder Bearbeitungsöle od.dgl. Medien, die verschmutzen und einer Filtrierung bedürfen. Der Flüssigkeitsfilter 10 wird über nicht weiter gezeigte Leitungen an die nicht gezeigte Maschine angeschlossen, von der z.B. über eine Zufuhrleitung 11 das zu filternde Medium in Pfeilrichtung 12 dem Flüssigkeitsfilter 10 zugeführt wird. Die Zufuhrleitung 11 kann in einem Stutzen am Flüssigkeitsfilter 10 enden oder, wie in Fig. 1 schematisiert dargestellt ist, sich bis in den Flüssigkeitsfilter 10 hinein fortsetzen und dort Austrittsöffnungen enthalten, über die entsprechend den angedeuteten Pfeilen 9 das zu filternde Medium in den Flüssigkeitsfilter 10 abgegeben wird. Über eine nicht weiter gezeigte Rückführleitung kann gefiltertes Medium vom Flüssigkeitsfilter 10 zurück zur Maschine geleitet werden. Dies kann in herkömmlicher Weise (DE-GM 82 04 275) geschehen.

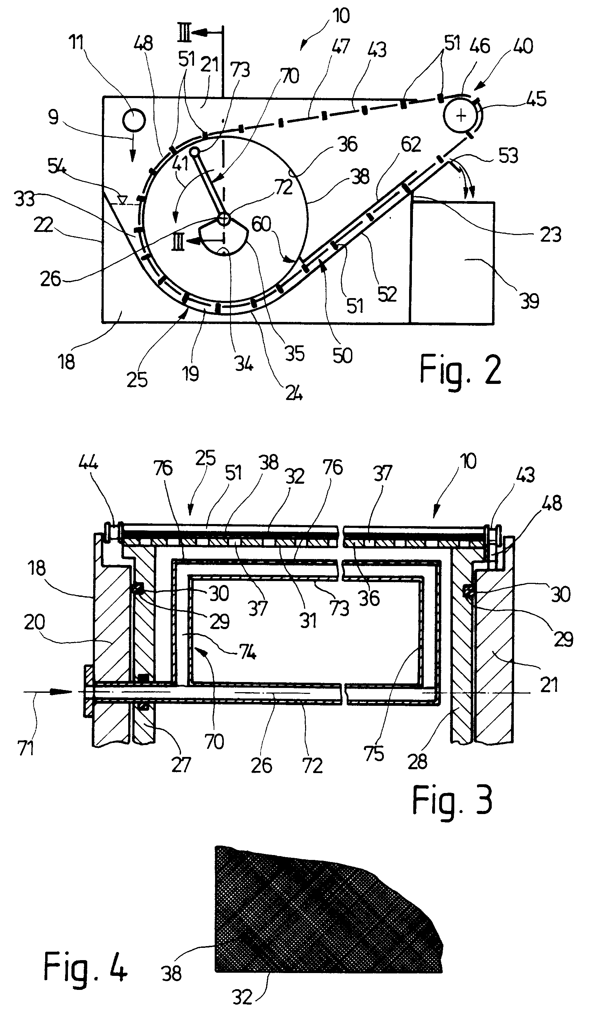

Der Flüssigkeitsfilter 10 weist ein Gehäuse 18 mit Filterkammer 19 darin auf. Das Gehäuse besteht aus zwei Seitenwänden 20,21, zwei gegenüberliegenden Querwänden 22, 23 und aus einem z.B. konkav gekrümmten Boden 24. Am Gehäuse 18, z.B. im Bereich der in Fig. 3 linken Seitenwand 20, ist ein Reintank 17 angeordnet, dem aus dem Flüssigkeitsfilter 10 gefiltertes Medium in Pfeilrichtung 14 oder über eine nicht weiter gezeigte Leitung vom Boden oder, wie Fig. 1 zeigt, von der linken Seite des Gehäuses 18 zugeführt wird. Mittels einer schematisch angedeuteten Pumpe 16 wird das gefilterte Medium aus dem Reintank 17 über eine nicht gezeigte Rückführleitung der Maschine zugeführt. Es versteht sich, daß statt dessen der Reintank 17 auch über eine nicht gezeigte Leitung mit der Reinkammer 34 verbunden sein kann, so daß die Pumpe 16 über diese Leitung gefiltertes Medium absaugt und z.B. in den Reintank 17 oder gleich zur Maschine führt.

Innerhalb des Gehäuses 18, und zwar innerhalb der dortigen Filterkammer 19, die oberhalb des Bodens 24 gebildet ist, ist eine liegende Trommel 25 um ihre hier horizontal verlaufende Längsmittelachse 26 drehbar gelagert. Die drehbare Lagerung erfolgt an den Seitenwänden 20 und 21. Die Trommel 25 weist auf beiden Axialseiten im Gehäuse 18 drehbar gelagerte Tragringe 27 und 28 auf, die mit oder ohne Speichen versehen sind und die an den axialen Enden der Trommel 25 in bezug auf das Gehäuse 18, insbesondere die jeweils zugekehrten Seitenwände 20,21, abgedichtet sind. Hierzu enthalten die Tragringe 27,28 jeweils Ringnuten 29, in denen jeweils Dichtungsringe 30, z.B. 0-Ringe, aufgenommen sind, die an den Seitenwänden 20, 21 anliegen. Die in Fig. 1 rechte Seite der Trommel 25 weist z.B. eine vollflächige Stirnwand als Abschlußteil auf, während die linke Seite einen Tragring 27 ohne Speichen aufweist. Die Trommel 25 weist ferner zwischen den Tragringen 27 und 28 ein dem Trommelumfang folgendes Stützteil 31 und ein auf letzterem aufliegendes, flüssigkeitsdurchlässiges Filterelement 32 auf. Die Trommel 25 ist von oben her in die Filterkammer 19, oberhalb des gekrümmten Bodens 24, eingesetzt und unterteilt das Innere der Filterkammer 19 in eine Schmutzkammer 33, die sich zu beiden Längsseiten der Trommel 25 außerhalb dieser befindet und der das zu filternde Medium über die Zufuhrleitung 11 zuführbar ist, und in eine Reinkammer 34, die innerhalb der Trommel 25 gebildet ist und aus der das gefilterte Medium über einen schematisch angedeuteten Auslaß 35 in Richtung der Pfeile 14 ableitbar ist, z.B. in den Reintank 17 einfließen kann.

Das Stützteil 31 der Trommel 25 erstreckt sich in Umfangsrichtung über den gesamten Trommelumfang und ist fester Bestandteil der Trommel 25. Das Stützteil 31 ist hierbei z.B. aus einem Zylindermantel 36 gebildet, insbesondere aus einem Blechmantel, und ist mit Durchlässen 37, z.B. Schlitzen und/oder Löchern, versehen, die das Medium durchlassen. Der Zylindermantel 36 ist endseitig an den Tragringen 27 und 28 befestigt. Das Filterelement 32 ist als zylindrischer Trommelmantel 38 ausgebildet, der fest, z.B. aber austauschbar, mit der Trommel 25, insbesondere dem Stützteil 31, verbunden ist. Dadurch sind ein Ersatz oder eine Änderung der Filterfeinheit möglich. Der Trommelmantel 38 ist als Dauerfilterelement ausgebildet. Er weist eine Filterfeinheit z.B. in der Größenordnung von etwa 20 Mikron bis 100 Mikron auf. Dabei kann der Trommelmantel 38 z.B. eine Maschenweite in der Größenordnung von 20 Mikron bis 100 Mikron besitzen. Der Trommelmantel 38 ist aus einem zumindest in Grenzen biegesteifen Material, insbesondere aus Metall oder Kunststoff, gebildet, und hierbei z.B. aus einem Gewebe, Gestricke, Gewirke, Geflecht od.dgl. Durchlässe für das Medium bildenden Teil. Der Trommelmantel 38 besteht z.B. aus einer zumindest in Grenzen flexiblen Matte oder Folie, wie sie in Fig. 4 für sich allein dargestellt ist. Ein so gestalteter Trommelmantel 38 ist einerseits ausreichend fest, z.B. abriebfest, und somit von hoher Lebensdauer. Andererseits ist ein so gestalteter Trommelmantel 38 soweit durchlässig, daß das Medium hindurchgelangen kann, und andererseits wiederum soweit undurchlässig, daß aus dem zu filternden Medium darin enthaltende Partikel abgefiltert werden können, die sich als Schmutzpartikel dann auf der Außenfläche des Trommelmantels 38 anlagern und von dort einfach und im automatischen Betrieb entfernt und z.B. einer Sammelkammer 39, z.B. einem Schmutzkasten, zugeführt werden können. Der Trommelmantel 38 ist als Zylinderkörper gestaltet, der die Trommel 25, insbesondere das Stützteil 31 in Form des Zylindermantels 36, gänzlich umschließt und fest jedoch auswechselbar damit verbunden ist. Dabei kann der Trommelmantel 38 durch Verspannen der Trommel 25, insbesondere des Stützteils 31, gehalten und nach außen abgedichtet sein.

Bei einem nicht gezeigten anderen Ausführungsbeispiel weist die Trommel 25 statt der als Speichenräder gestalteten Tragringe 27 und 28 das Trommelinnere axial abschließende Abschlußteile, z.B. in Form geschlossener Stirnwände, auf, so daß sich dann ein axial über die Stirnwände geschlossenes Trommelinneres mit darin gebildeter Reinkammer 34 ergibt, wobei die Abdichtung gegenüber der Schmutzkammer 33 über Lagerzapfen, Lagerringe od. dgl. erfolgt.

Der in Fig. 1 und 2 schematisch angedeutete Auslaß 35, der am dortigen axialen Endbereich der Trommel 25 vorgesehen ist, steht mit der im Trommelinneren befindlichen Reinkammer 34 in Verbindung und dient in beschriebener Weise der Ableitung des gefilterten Mediums aus dem Inneren der Trommel 25 nach außen z.B. in den Reintank 17. Er ist vorzugsweise nicht zentrisch und so tief wie möglich angeordnet, damit die Reinkammer 34 möglichst leerläuft.

Der Flüssigkeitsfilter 10 weist eine Antriebseinrichtung 40 zum kontinuierlichen oder, sofern gewünscht, auch taktweisen umlaufenden Drehantrieb der Trommel 25 auf. Mittels der Antriebseinrichtung 40 wird die Trommel 25 in einer Drehrichtung gemäß Pfeil 41 umlaufend angetrieben. Die Antriebseinrichtung 40 weist einen Antriebsmotor 42, z.B. Getriebemotor, auf, der entweder unmittelbar, wie nicht gezeigt ist, oder in gezeigter Weise mittelbar an der Trommel 25 zu deren Drehantrieb angreift. Der Antriebsmotor 42 treibt einen zumindest auf einer Axialseite der Trommel 25 angeordneten und zur Trommel 25 und zurück geführten Kettenstrang 43 an, der beim gezeigten Ausführungsbeispiel auf der gleichen Seite wie der Antriebsmotor 42 verläuft. Auch auf der anderen Axialseite der Trommel 25 befindet sich ein Kettenstrang 44, der ebenfalls zur Trommel 25 und von dort zurück geführt ist. Beide Kettenstränge 43 und 44 sind etwa auf Höhe des Antriebsmotors 42 über eine gemeinsame Umlenkung geführt, die hier z.B. aus jeweiligen Kettenrädern 45 besteht, die über eine Welle 46 miteinander verbunden sind und von denen lediglich das Kettenrad 45 des Kettenstranges 43 zu sehen ist. Der Antriebsmotor 42 kann unmittelbar oder mittelbar,z.B. über ein Getriebe, an dieser Umlenkung in Gestalt des Kettenrades 45 mit Welle 46 angreifen. In diesem Bereich kann die Antriebseinrichtung 40 auch eine nicht weiter gezeigte Spanneinrichtung zum Spannen der Kettenstränge 43,44 aufweisen.

Beim gezeigten Ausführungsbeispiel verläuft der obere Trum 47 des sichtbaren Kettenstranges 43 etwa tangential zur Trommel 25. Bei einem anderen, nicht gezeigten Ausführungsbeispiel befindet sich im Bereich zwischen der Trommel 25 und der Welle 46 noch eine weitere Kettenumlenkung, die z.B. eine zur Welle 46 etwa parallel verlaufende Achse mit jeweils darauf drehbar gehaltenen Kettenrädern aufweist, die von oben her auf den jeweils oberen Trum 47 des Kettenstranges 43 bzw. den nicht sichtbaren oberen Trum des anderen Kettenstranges 44 drücken. Auf diese Weise ist erreichbar, daß beide Trums der Kettenstränge 43,44, die sich in Fig. 2 rechts der Trommel 25 erstrecken, zumindest im wesentlichen parallel zueinander verlaufen, was u.a. auch die Regulierung der Kettenspannung mittels der nicht gezeigten Spanneinrichtung erleichtert und auch dazu führt, daß im Bereich der Trommel 25 ein größerer Umschlingungswinkel der Kettenstränge 43,44 erreicht wird.

Die Trommel 25 ist mittels der Antriebseinrichtung 40 gleichbleibend in der einen Drehrichtung gemäß Pfeil 41 antreibbar. Je nach den betrieblichen Anforderungen kann es aber zweckmäßig sein, die Trommel 25 auchgegensinnig dazu umlaufen zu lassen. Zweckmäßigerweise ist deswegen der Antriebsmotor 42 in seiner Drehrichtung umsteuerbar.

Für den zwangsläufigen Drehantrieb der Trommel 25 über zumindest den einen Kettenstrang 43 ist die Trommel 25 in diesem, in Fig. 3 rechten Axialbereich mit einem Antriebsteil 48, z.B. einem Kettenrad, versehen, der an der Trommel 25 befestigt ist und über den der Kettenstrang 43 hinweggeführt ist.

Bei einem anderen, nicht gezeigten Ausführungsbeispiel ist statt der Kettenstränge 43,44, eine andere getriebliche Übertragung vorgesehen, z.B. ein Riementrieb, dessen antreibender Strang dann über einen als Riemenscheibe ausgebildeten Antriebsteil 48 der Trommel 25 geführt ist. Statt dessen kann die Antriebseinrichtung 40 auch direkt im Bereich der Trommel 25 angeordnet sein, z.B. dem in Fig. 3 rechten axialen Ende direkt benachbart sein, und die Trommel 25 direkt antreiben.

Die beschriebene Antriebseinrichtung 40 mit den Kettensträngen 43,44 hat demgegenüber jedoch einen besonderen Vorteil, der später noch näher erläutert wird und darin liegt, daß die Kettenstränge 43,44 noch zu anderen Zwecken zusätzlich benutzt werden.

Der Flüssigkeitsfilter 10 weist eine die Trommel 25 zumindest auf einem Umfangswinkelbereich umgreifende Austrageinrichtung 50 auf, mittels der sich auf der Außenfläche des Trommelmantels 38 und/oder in der Schmutzkammer 33 ablagernde Partikel, insbesondere Schmutzpartikel,von dieser Außenseite und aus der Schmutzkammer 33 austragbar sind. Dabei ist diese Austrageinrichtung 50 zugleich als Fördereinrichtung,insbesondere Kratzfördereinrichtung,gestaltet.Die Austrageinrichtung 50 weist umlaufend angetriebene, entlang einer Zylindermantellinie des Trommelmantels 38 verlaufende Kratzer 51 auf, z.B. in Form von Stegen, Leisten, Bürsten od.dgl., die in Fig. 1 - 3 nur schematisch als längsverlaufende Leisten dargestellt sind. Diese Kratzer 51 werden beim umlaufenden Drehantrieb der Trommel 25 in Berührung mit der Außenfläche des Trommelmantels 38 gebracht oder bleiben außer Berührung damit und durchlaufen die Schmutzkammer 33 im untersten Bereich, so daß sie den Abtransport der sich ablagernden Partikel bewirken können.

Die Austrageinrichtung 50 kann auf beiden Axialseiten der Trommel 25 befindliche, um die Trommel 25 umgelenkte und von irgend einem Antrieb angetriebene Tragmittel aufweisen, die ähnlich den Kettensträngen 43, 44 verlaufen. Zwischen diesen Tragmitteln erstrecken sich die einzelnen Kratzer 51, die daran endseitig gehalten sind und in Umlaufrichtung in vorgegebenen Abständen z.B. etwa von 20 cm angeordnet sind. In vorteilhafter Weise sind als Tragmittel für diese Kratzer 51 die beiden Kettenstränge 43 und 44 herangezogen, an denen die Kratzer 51 mit ihren Enden angebracht sind.

Die Filterkammer 19 weist im Bereich des unteren Trums der Tragmittel mit Kratzern 51, hier also der Kettenstränge 43, 44 mit dazwischen verlaufenden Kratzern 41, der sich in Fig. 2 rechts befindet und von der Trommel 25 wegstrebt und im dortigen Außenbereich der Trommel schräg ansteigend verläuft, eine schräg ansteigende untere Leitwand 52 als Teil des Bodens 24 auf, die sich unterhalb der Umlaufbahn der Kratzer 51 befindet. Diese schräg ansteigende Leitwand 52 dient mit dem Austrag der Schmutzpartikel mittels der Austrageinrichtung 50, da beim Umlauf der Kratzer 51 diese an der Oberseite der Leitwand 52 aufliegen und von dort von der Trommel 25 weg nach oben geführt sind, so daß Schmutzpartikel, die von einem Kratzer 51 vorwärtsgeschoben werden, auf der Oberseite dieser Leitwand 52 hochtransportiert werden. Die Leitwand 52 ist aus dem Gehäuse 18 über die Querwand 23 hinausgeführt und weist z.B. einen endseitigen Abwurfabschnitt 53 auf, über den von den Kratzern 51 der Austrageinrichtung 50 abtransportierte Partikel aus dem Gehäuse 18 heraus führbar und abgebbar sind, z.B. in die darunter angeordnete Sammelkammer 39. Diese kann durch einen abtransportierbaren Kasten gebildet sein, der dann, wenn er mit Schmutzpartikeln gefüllt ist, abtransportiert und entleert wird. Die auf diese Weise herausgefilterten und gesammelten Schmutzpartikel können einer eigenständigen Entsorgung oder, sofern möglich, einer Wiederverwendung zugeführt werden, was z.B. bei metallischen feinen Spänen der Fall ist, die einschmelzbar oder in sonstiger Weise anderweitig verwendbar sein können.

Eine weitere Besonderheit des Flüssigkeitsfilters 10 liegt darin, daß eine an der Außenfläche des Trommelmantels 38 angreifende, etwa achsparallele und sich zumindest im wesentlichen entlang einer Zylindermantellinie des Trommelmantels 38 erstreckende Abstreifeinrichtung 60 vorgesehen ist, mittels der Partikel, die sich auf der Außenfläche des Trommelmantels 38 ablagern, beim Umlauf der Trommel 25 abstreifbar sind. Die Abstreifeinrichtung 60 weist einen Abstreifer 61, z.B. in Form einer Bürste, auf, der am Ende einer Abstreifplatte 62 gehalten ist und zum Trommelmantel 38 hin gerichtet ist. Der Abstreifer 61 verhindert zum einen einen Partikelstau auf der Außenfläche des Trommelmantels 38 und bewirkt zum anderen eine Säuberung der Oberfläche des Trommelmantels 38 von groben Schmutzteilen. Die Abstreifplatte 62 erstreckt sich etwa innerhalb einer Tangentialebene oder einer Sekantenebene zum Trommelmantel 38 und ist in dem Außenbereich der Tromel 25 angeordnet, der sich in Fig. 2 rechts und dort befindet, wo die schräg ansteigende Leitwand 52 verläuft. Die Abstreifeinrichtung 60 ist dabei oberhalb der Bahn der Kratzer 51 und der schräg ansteigenden Leitwand 52 angeordnet so, daß die Kratzer 51 durch den Zwischenraum zwischen der Leitwand 52 und der Abstreifplatte 62 hindurchlaufen können.

Wie schon erläutert ist, ist die Schmutzkammer 33 im radialen Außenbereich der Trommel 25 und dabei gemäß Fig. 2 sowohl im links als auch rechts der Trommel 25 befindlichen Bereich oberhalb des Bodens 24 gebildet. Die Trommel 25 ist im Gehäuse 18 zu dieser Schmutzkammer 33 hin abgedichtet, so daß das Trommel innere, das die Reinkammer 34 bildet, nicht mit der Schmutzkammer 33 in Verbindung steht, ausgenommen durch das Filterelement 32 in Form des Trommelmantels 38. Der Boden 24 und die in Fig. 2 nach rechts ansteigende Leitwand 52 sowie die in Fig. 2 nach links ansteigende Wandung des Bodens 24 sind jeweils einstückig miteinander, was jedoch nicht zwingend ist.

Ein weiteres wesentliches Merkmal liegt darin, daß im Inneren der Trommel 25 eine dem Trommelmantel 38 zugeordnete Reinigungseinrichtung 70 angeordnet ist, die z.B. mit dem Gehäuse 18 fest, aber leicht demontierbar, verbunden und somit relativ zur umlaufenden Trommel 25 feststehend angeordnet ist. Mittels der Reinigungseinrichtung 70 ist der Trommelmantel 38 von innen her zum Entfernen von darauf ablagernden Partikeln beaufschlagbar, so daß also das Filterelement 32 in Gestalt des beschriebenen Trommelmantels 38 mittels der Reinigungseinrichtung 70 vom Inneren der Trommel 25 her gereinigt werden kann, wobei die Reinigung z.B. taktweise je nach Bedarf erfolgen kann. Mittels der Reinigungseinrichtung 70 ist der Trommelmantel 38 von innen her durch Druckmittelbeaufschlagung abreinigbar. Hierzu wird die Reinigungseinrichtung 70 mit einem Druckmittel, insbesondere Druckgas, z.B. Druckluft, und/oder Druckflüssigkeit gespeist, die in Fig. 1 und 3 in Richtung des Pfeiles 71 der Reinigungseinrichtung 70 zuführbar ist. Als Druckmittel kann in die Reinigungseinrichtung 70 z.B. Preßluft eingeführt werden. Von Vorteil kann es statt dessen aber sein, wenn unter Druck eine Flüssigkeit eingespeist wird, z.B. aus der Reinkammer 34 entnommenes, gefiltertes Medium, das über eine von der Druckseite der Pumpe 16 abzweigende Leitung mittels dieser Pumpe 16 eingespeist wird, oder auch von einer fremden Quelle stammendes flüssiges Medium oder auch eine Mischung aus zu filterndem und bereits gefiltertem Medium, wie es den jeweiligen Bedürfnissen entspricht. Dabei ist z.B. ein pulsierendes Abspülen durch Zwischenschalten eines Magnetventiles mit Wechselbetrieb ein/aus möglich. Die Einspeisung des Druckmittels in die Reinigungseinrichtung 70 ist auch mit einer separaten Pumpe möglich.

Die Reinigungseinrichtung 70 weist z.B. eine zur Längsmittelachse 26 koaxiale Leitung 72, z.B. in Gestalt eines Rohres, eines Schlauches od.dgl., auf, an die ein in radialem Abstand davon verlaufender Verteiler 73 über Leitungen 74,75 angeschlossen ist, die zugleich Träger des Verteilers 73 sind und das in Pfeilrichtung 71 eingeleitete Druckmittel dem Verteiler 73 zuführen. Der Verteiler 73 erstreckt sich entlang einer Zylindermantellinie des Trommelmantels 38 im Inneren der Trommel 25, und dabei nahe der Innenfläche des Stützteiles 31 und des Trommelmantels 38 Im Verteiler 73 sind mehrere Druckmittelauslaßöffnungen 76 in Form von Schlitzen, Bohrungen od.dgl. enthalten, durch die das zugeführte Druckmittel gegen die Innenfläche des Stützteiles 31 und des Trommelmantels 38 spritzbar ist so, daß das Druckmittel die Maschen des Trommelmantels 38 passieren und darin befindliche Schmutzpartikel entfernen und auswaschen kann. Statt einzelner Druckmittelauslaßöffnungen 76 kann der Verteiler 73 auch einen längsdurchlaufenden Auslaßschlitz oder mehrere einzelne in Abständen aufeinanderfolgende Auslaßschlitze enthalten. Die Druckmittelauslaßöffnungen 76 sind als Düsenaustrittsöffnungen ausgebildet, wobei die Reinigungseinrichtung 70 als Düsenstock gestaltet ist.

Ein taktweiser Umlauf der Trommel 25 statt eines kontinuierlichen Umlaufs kann insbesondere im Zusammenhang mit einem taktweisen Einschalten der Reinigungseinrichtung 70, um ein konzentriertes Abreinigen des Trommelmantels 38 und Spülen zu erreichen, von Vorteil sein. Dabei kann es zweckmäßig sein, die Reinigungseinrichtung 70 nur solange einzuschalten, wie die Antriebseinrichtung 40 und damit der Drehantrieb der Trommel 25 stillgesetzt ist. Statt dessen kann natürlich auch die Reinigungseinrichtung 70 eingeschaltet und dabei die Trommel 25 umlaufend angetrieben werden, so daß für diese Phase ein kompletter Reinigungszyklus des gesamten Umfangs des Trommelmantels 38 erfolgt.

Die Reinigungseinrichtung 70 ist relativ zur umlaufenden Trommel 25 drehfest aber leicht demontierbar gehalten. Hierzu dient z.B. eine Flansch- oder Schraubverbindung. Dadurch kann die Reinigungseinrichtung 70 leicht demontiert werden, z.B. um die Düsen nachträglich austauschen zu können oder aber, wenn nötig, gegen solche mit anderer Charakteristik,z.B. mit mehr oder weniger Druck oder Durchsatz oder mit anderer Strahlenwirkung, z.B. Rund- oder Flachstrahlwirkung, wechseln zu können. Bei einem anderen, nicht gezeigten Ausführungsbeispiel kann die Reinigungseinrichtung 70 z.B. auch um die Längsmittelachse 26 drehbar sein, so daß man durch Drehung der Reinigungseinrichtung 70 entlang der inneren Umfangsfläche der Trommel 25 die gesamte Filterfläche des Trommelmantels 38 auf diese Weise von innen her abreinigen und spülen kann.

Der Flüssigkeitsfilter 10 arbeitet wie folgt. Das zu filternde Medium wird über die Zufuhrleitung 11 in die Schmutzkammer 33 eingeleitet, in der der Flüssigkeitsstand z.B. etwa bis zum Niveau 54 steht. Dies kann etwa dreiviertel der Höhe der Trommel 25 entsprechen. In diesem Bereich kann ein Niveauschalter sitzen, der in Abhängigkeit vom FLüssigkeitsstand in der Schmutzkammer 33 den Zufluß und/ oder die Antriebsreinrichtung 40 ansteuert. Das gefilterte Medium wird aus dem Inneren der Trommel 25 und der dort befindlichen Reinkammer 34 durch den Auslaß 35 in Pfeilrichtung 14 abgegeben und in den Reintank 17 geführt , aus dem es mittels der Pumpe 16 zu einer nicht gezeigten Maschine gepumpt werden kann. Die Trommel 25 wird über die Antriebseinrichtung 40, insbesondere die Kettenstränge 43,44, in Pfeilrichtung 41 umlaufend angetrieben. Dabei wandern die Kratzer 51 der Austrageinrichtung 50 der Bahn der Kettenstränge 43,44 folgend um und tragen den sich auf der Oberfläche des Trommelmantels 38 und/oder in der Schmutzkammer 33 absetzenden Schmutz ab und über die schräg ansteigende Leitwand 52 bis zum Abwurfabschnitt 53 aus, so daß der Schmutz von dort in die Sammelkammer 39 gelangen kann. Mittels der Abstreifeinrichtung 60 wird verhindert, daß sich auf der Oberfläche des Trommelmantels 38 ein Schmutzstau bildet, wobei die Oberfläche von groben Schmutzteilen gesäubert wird. Die vom Abstreifer 61 abgestreiften Partikel gelangen auf die darunter verlaufende Leitwand 52 und werden mittels der Kratzer 51 ausgetragen. Zumindest zeitweise kann durch Einschalten der Reinigungseinrichtung 70 das Filterelement 32 in Form des Trommelmantels 38 gereinigt werden, so daß die Durchlässigkeit des Trommelmantels 38 und die Filterfunktion dann immer wieder gewährleistet sind. Der dabei entfernte Schmutz fällt nach unten und wird dann von den Kratzern 51 ausgetragen.

Da das Filterelement 32 in beschriebener Weise aus einer Matte, Folie od.dgl. besteht, ist dieses in hohem Maße standfest und ermöglicht ohne Beschädigung ein Entfernen von Schmutzpartikeln davon, die sich auf der Außenseite des Trommelmantels 38 bei der Filterfunktion ablagern. Aufgrund dieses als Dauerfilterelement ausgebildeten Trommelmantels 38 fällt beim Filtervorgang allein der auf der Außenseite des Trommelmantels 38 abgelagerte und ausgetragene Schmutz in der Sammelkammer 38 partikelförmig an, der als Schlamm aufbereitbar und bedarfsweise auch deponiefähig ist, so daß es diesbezüglich keine Entsorgungsprobleme gibt, die im Vergleich dazu bei bekannten Flüssigkeitsfiltern vorherrschen, bei dem als Filterelement ein verlorenes Filtervlies, z.B. Papierband od.dgl., anfällt, das mit abgefilterten Partikeln durchsetzt und bedeckt ist und erhebliche Entsorgungsprobleme mit sich bringt. Der erfindungsgemäße Flüssigkeitsfilter 10 ist einfach, funktionssicher und gewährleistet einen kostenkünstigen Betrieb, da kein zusätzliches, verlorenes Filtermaterial verwendet werden muß. Dies vereinfacht zugleich den Betrieb und reduziert die Störanfälligkeit weiter. Von Vorteil ist ferner, daß der Flüssigkeitsfilter 10 aufgrund des besonderen, als Dauerfilterelement gestalteten Trommelmantels 38 einen großen Durchsatz und somit eine hohe Filterleistung gewährleistet. Der Flüssigkeitsfilter 10 ist auch schnell an eine Umstellung der jeweiligen Werkzeugmaschine, des Bearbeitungszentrums od.dgl. Produktionsmaschine anpaßbar, z.B. dann, wenn die Maschinenvon einem Bearbeitungszyklus, bei dem Gußteile bearbeitet wurden und Gußspäne anfallen, auf die Bearbeitung von Werkstücken aus anderen Materialien, z.B. Aluminium od.dgl., umgestellt werden. In solchen Fällen, bei denen zusammen mit der Kühlemulsion z.B. Späne anfallen, die von der Kühlemulsion mittels des Flüssigkeitsfilters abzufiltern sind, ist letzterer schnell an dieses andere Partikelmaterial anpaßbar. Es erfolgt z.B. kurzzeitig eine Reinigung der Trommel 25 mittels der Reinigungseinrichtung 70, woraufhin der Flüssigkeitsfilter für mit Partikeln aus anderen Materialien behaftete Medien zum Filtern dieser wieder zur Verfügung steht. Die abgefilterten Partikel lassen sich jeweils sortiert in der Sammelkammer 39 sammeln und aufbereiten oder in sonstiger Weise ohne Entsorgungsprobleme wiederverwenden oder entsorgen.

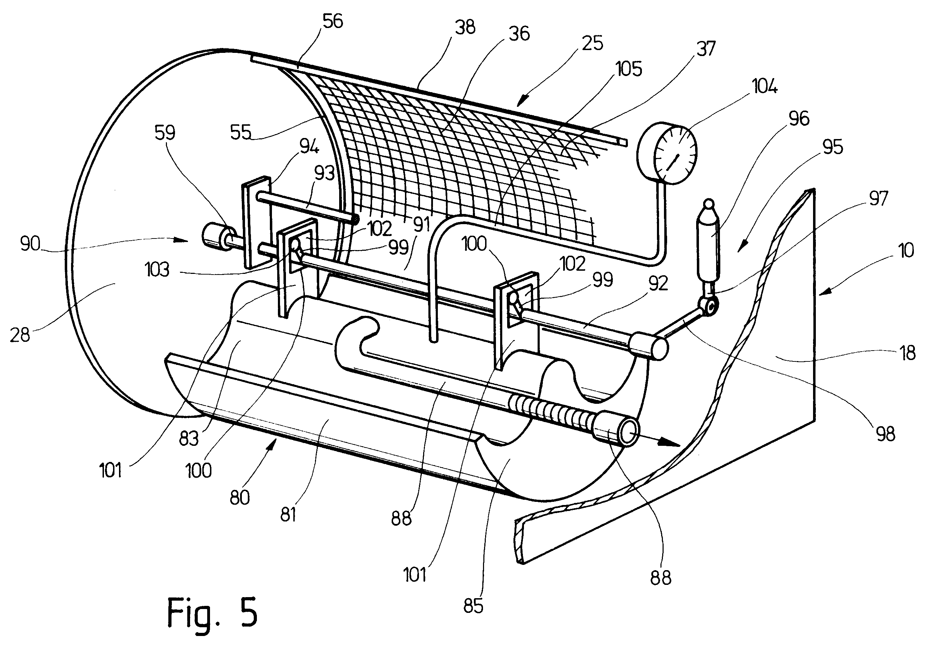

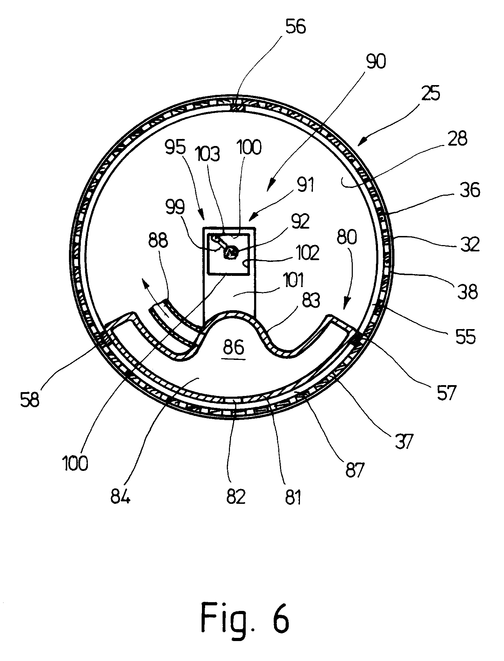

In Fig. 5 und 6 ist der Flüssigkeitsfilter 10 gemäß Fig. 1 bis 4 gezeigt, der für einen vakuumunterstützten Filterbetrieb nachgerüstet ist. Der beschriebene Flüssigkeitsfilter 10 enthält einen in die Trommel 25 eingebrachten und an den im unteren Bereich befindlichen inneren Trommelumfang von innen her angelegten und angepreßten, bedarfsweise abhebbaren und entfernbaren, Hohlkörper 80, der in einer Wandung 81 zumindest eine Öffnung 82 enthält. Die Wandung 81 folgt dem Zylinderverlauf der Trommel 25 und erstreckt sich über ein Zylindersegment, und zwar z.B. über etwa 120° Umfangswinkel sowie über die gesamte axiale Länge der Trommel 25. An die gekrümmte Wandung 81 schließt sich ein restlicher Wandungsteil 83 mit beidseitigen Stirnwänden 84, 85 an, die untereinander und mit der Wandung 81 zu einem dichten Körper verbunden sind und im Inneren 86 einen unter Unterdruck setzbaren Raum begrenzen. Die mindestens eine Öffnung 82 besteht vorzugsweise aus einem längsdurchlaufenden Schlitz, der sich im unteren Bereich des Hohlkörpers 80, insbesondere der Wandung 81, befindet. Die Wandung 81 ist dem inneren Umfang der Trommel 25 von innen her zugewandt und entlang den in Umfangsrichtung sowie in Längsrichtung verlaufenden Rändern gegen diesen inneren Trommelumfang abgedichtet. Zur Abdichtung dienen zum einen an jedem axialen Ende der Trommel 25 auf der Trommelinnenseite befindliche umlaufende Dichtungsringe, insbesondere Profilringe, von denen in Fig. 5 und 6 nur ein Dichtungsring 55 am einen Ende zu sehen ist. Jeder Dichtungsring 55 sitzt fest am inneren Trommelumfang und erstreckt sich über den gesamten Durchmesser, wobei in jeder 120°-Umfangswinkelstellung der Trommel 25 relativ zum nicht drehbaren Hohlkörper 80 endseitig dieses die Wandung 81 gegenüber der inneren Umfangsfläche der Trommel 25 abgedichtet ist. Die Wandung 81 liegt mit ihrer zugewandten Außenseite an diesem jeweiligen Dichtungsring 55 an. Für die Abdichtung in Richtung des Längsverlaufs des Hohlkörpers 80 sind auf der Innenseite der Trommel 25 längsdurchlaufende Dichtleisten 56, 57 und 58 vorgesehen, die hier z.B. in etwa 120° Umfangswinkelabständen aufeinanderfolgen. Die Wandung 81 liegt bei der in Fig. 5 und 6 gezeigten relativen Drehstellung der Trommel 25 an den beidseitigen Dichtleisten 57 und 58 an. Wird die Trommel 25 relativ zum nicht drehbaren Hohlkörper 80 um 120° Umfangswinkel gedreht und hiernach wieder stillgesetzt, so liegt die Wandung 81 dann z.B. an den Dichtleisten 57 und 56 oder 58 und 56 - je nach Drehrichtung der Trommel 25 - an.

Auf jeden Fall ist der Hohlkörper 80, insbesondere dessen Wandung 81, randseitig gegen den inneren Trommelumfang abgedichtet, so daß dazwischen eine Druckkammer 87 gebildet ist. Die Druckkammer 87 steht über die mindestens eine Öffnung 82 mit dem Inneren 86 des Hohlkörpers 80 in Verbindung. Das Innere 86 des Hohlkörpers 80 ist über mindestens eine Leitung 88 bedarfsweise mit einer nicht weiter gezeigten Vakuumpumpe verbindbar, mittels der im Inneren 86 des Hohlkörpers 80 und in der Druckkammer 87 ein Unterdruck erzeugbar ist. Aufgrund dieses Unterdruckes ist eine erhebliche Leistungssteigerung des Flüssigkeitsfilters 10 erzielbar. Dieser eignet sich dann auch für höhere Viskositäten und ermöglicht höhere Durchsätze.

Ersichtlich erstreckt sich der Hohlkörper 80 über etwa 120° Umfangswinkel in Umfangsrichtung und in Axialrichtung etwa über die gesamte Länge der Trommel 25. Der Hohlkörper 80 weist ein Segment auf, das etwa einem 120°-Umfangssegment eines Hohlzylinders entspricht. Es versteht sich gleichwohl, daß statt dessen auch ein Hohlkörper 80 mit kleinerer Umfangswinkelerstreckung zum Einsatz kommen kann.

Der Hohlkörper 80 ist mittels einer besonderen Halteeinrichtung 90 in der Trommel 25 halterbar. Die Halteeinrichtung 90 weist zumindest einen Längshalter 91 in Form einer längsverlaufenden Stange 92 auf. Der Längshalter 91 ist mit dem in Fig. 5 links verlaufenden einen Ende lösbar an der dortigen Stirnwand 28 der Trommel 25 halterbar. Hierzu trägt die Stirnwand 28 einen Rohrstutzen 59, eine Muffe od. dgl. Aufnahme, in die die Stange 92 mit einem Ende einsteckbar ist. Die darin eingesteckte Stange 92 ist in diesem Rohrstutzen 59 relativ dazu drehverstellbar aufgenommen. Dies bedeutet also, daß bei Drehbetätigung der Trommel 25 letztere sich relativ zur nicht drehbaren Stange 92 störungsfrei drehen kann. Das in Fig. 5 nicht sichtbare andere Ende der Stange 92 ist z.B. an einer dortigen Wandung des Gehäuses 18 des Flüssigkeitsfilters axial sicherbar. Der Längshalter 91 weist zusätzlich zur Stange 92 oberhalb dieser ein längsverlaufendes Verstärkungselement 93 auf, das über Laschen 94 fest mit der Stange 92 verbunden ist und der Versteifung der Stange 92 dient, insbesondere ein Durchhängen dieser verhindert.

Der in die Trommel 25 einzubringende Hohlkörper 80 ist somit für die Nachrüstung bereitstehend an der Halteeinrichtung 90, insbesondere am Längshalter 91, hängend gehalten. Der Hohlkörper 80 wird mitsamt dieser Halteeinrichtung 90 in das Innere der Trommel 25, wie in Fig. 5 und 6 gezeigt ist, eingebracht. Ferner ist eine Betätigungseinrichtung 95 vorgesehen, mittels der der Hohlkörper 80 von innen her an die Trommel 25 anpreßbar bzw. gegensinnig dazu von der Trommel 25 abhebbar ist.

Die Betätigungseinrichtung 95 weist einen Antrieb auf, der hier z.B. aus einem druckmittelbetriebenen Arbeitszylinder 96 besteht, dessen Kolbenstange 97 gelenkig an einem Hebel 98 angreift, der drehfest mit der Stange 92 verbunden ist. Die Betätigungseinrichtung 95 greift in dieser Weise am Längshalter 91, insbesondere der Stange 92, zur Schwenkbetätigung an. Der Arbeitszylinder 96 ist in üblicher Weise zur Einleitung der Schwenkbetätigung steuerbar. Teil der Betätigungseinrichtung 95 ist ferner die Stange 92. Ferner weist die Betätigungseinrichtung 95 am Längshalter 91, insbesondere der Stange 92, sitzende Mitnehmer 99 auf, die an Mitnahmeflächen 100 zugeordneter Hängetragelemente 101 des Hohlkörpers 80 anliegen. Die Hängetragelemente 101 des Hohlkörpers 80 sind z.B. aus etwa vertikal hochragenden Laschen gebildet, die etwa fensterartige Öffnungen 102 darin enthalten, die z.B. etwa Rechteckkontur haben. Die Kanten der Öffnungen 102 bilden die Mitnahmeflächen 100.

Die Mitnehmer 99 sind fest an der Stange 92 angebracht und bestehen z.B. aus etwa radial abstehenden Fingern, die sich etwa innerhalb der Ebene der jeweiligen etwa fensterartigen Öffnung 102 erstrecken. Die Mitnehmer 99 können mit ihrem Ende entweder direkt an der jeweiligen Mitnahmefläche 100 in Form der Kante der jeweiligen Öffnung 102 anliegen. Von Vorteil kann es auch sein, wie gezeigt ist, daß die Mitnehmer 99 an ihrem Ende jeweils dort drehbare Rollen 103 tragen, die dann ihrerseits in Kontakt mit der Mitnahmefläche 100 stehen.

In der in Fig. 5 und 6 gezeigten Drehstellung befinden sich die einzelnen Mitnehmer 99 etwa unter 45°. Sie haben mit ihren Enden, insbesondere deren dortige Rollen 103, die obere, etwa horizontal verlaufende Kante der etwa fensterartigen Öffnungen 102 erreicht. Bei weiterer Schwenkbetätigung der Stange 92 und dadurch erreichter Schwenkbetätigung der Mitnehmer 99 wird darüber der Hohlkörper 80 in vertikaler Richtung angehoben. Wird die Stange 92 mittels der Betätigungseinrichtung 95 gegensinnig, in Fig. 6 im Gegenuhrzeigersinn, geschwenkt, so führt dies zum Absenken des Hohlkörpers 80 relativ zur Stange 92 in vertikaler Richtung. Wenn die Enden der Mitnehmer 99, z.B. die dortigen Rollen 103, die untere horizontale Kante der etwa fensterartigen Öffnung 102 erreichen, so bewirkt eine Schwenkbetätigung der Stange 92 im Gegenuhrzeigersinn (Fig.6) ein Anpressen des Hohlkörpers 80 nach unten und gegen die innere Umfangsfläche der Trommel 25.

Der Flüssigkeitsfilter 10 weist eine hier nicht weiter gezeigte Steuereinrichtung auf, zu der u.a. ein in Fig. 5 angedeutetes einstellbares Kontaktunterdruckmanometer 104 gehört. Dieses steht über eine Leitung 105 mit dem Inneren 86 des Hohlkörpers 80 in Verbindung. Beim Kontaktunterdruckmanometer 104 handelt es sich um ein Meßgerät mit integriertem Schalter, dessen Schaltschwelle einstellbar ist. Geht man davon aus, daß im Normalbetrieb bei eingeschalteter, über die Leitung 88 angeschlossener Vakuumpumpe ein Normalbetriebsdruck von z.B. 0,3 bar herrscht und das Kontaktunterdruckmanometer 104 z.B. auf 0,6 bar eingestellt ist, so spricht letzteres bei Erreichen dieses eingestellten Druckes an und bewirkt eine Abschaltung der mit dem Hohlkörper 80 in Verbindung stehenden Vakuumpumpe. Ferner wird darüber die Betätigungseinrichtung 95 zum Abheben des Hohlkörpers 80 von der inneren Umfangsfläche der Trommel 25 eingeschaltet. Sodann wird darüber die anhand von Fig. 1 bis 4 erläuterte Antriebseinrichtung 40 für die Trommel 25 eingeschaltet und mittels dieser die Trommel 25 in der einen oder anderen Richtung z.B. über einen Umfangswinkel von etwa 120° gedreht. Ferner wird über diesen Einschaltimpuls die anhand von Fig. 1 bis 4 erläuterte Reinigungseinrichtung 70 zum Reinigen des Filterelements 32 z.B. mittels hindurchgeblasenem Druckgas, z.B. Druckluft, eingeschaltet. Dieser Reinigungsbetrieb durch hindurchgeblasenes Druckgas erfolgt z.B. impulsartig mit kurzen Unterbrechungen. Zusätzlich zum Druckgas kann mittels der Reinigungseinrichtung 70 auch über eine Spülpumpe Flüssigkeit zur Reinigung des Filterelements 32 hindurchgeleitet werden. Diese Reinigung des Filterelements 32 erfolgt während der Drehung der Trommel 25. Nach der Trommeldrehung wird die Antriebseinrichtung 40 abgeschaltet, z.B. über einen Zeitgeber oder über einen hier nicht gezeigten Kontaktschalter, der von Schaltnocken an der Trommel 25 beaufschlagt wird, die z.B. in Umfangswinkelabständen von 120° versetzt zueinander angeordnet sind. Mit Abschaltung der Antriebseinrichtung 40 wird auch die Reinigungseinrichtung 70 abgeschaltet und die Betätigungseinrichtung 95 zum Absenken des Hohlkörpers 80 und Andrücken dieses an die innere Umfangsfläche der Trommel 25 eingeschaltet. Ist der Hohlkörper 80 angepreßt, so kann hiernach die nicht weiter gezeigte Vakuumpumpe wieder eingeschaltet werden. Durch Ansprechen des Kontaktunterdruckmanometers 104 wird somit der Vorgang Abheben des Hohlkörpers 80, Reinigen des Filterelements 32 über die Reinigungseinrichtung 70, gewünschtenfalls mit Spülung, und Drehung der Trommel 25 mittels der Antriebseinrichtung 40 eingeleitet.

Der Zulauf der zu reinigenden Flüssigkeit über die Zufuhrleitung 11 in die Schmutzkammer 33 und der Betrieb einer dafür vorgesehenen Zulaufpumpe kann durch einen nicht weiter gezeigten Schwimmerschalter gesteuert werden, d.h. eingeschaltet bzw. abgeschaltet werden.

## Patentansprüche

1. Flüssigkeitsfilter, insbesondere für Kühl-, Schmier- und/oder Bearbeitungsmedien, z.B. für Werkzeugmaschinen, Bearbeitungszentren oder dergleichen Produktionsmaschinen, mit einem Gehäuse (18) mit Filterkammer (19), innerhalb der eine liegende Trommel (25) drehbar gehalten ist, die ein dem Trommelumfang folgendes flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist,
**dadurch gekennzeichnet**,
daß das Filterelement (32) als zylindrischer Trommelmantel (38) ausgebildet ist, der fest aber vorzugsweise lösbar und auswechselbar mit der Trommel (25), z.B. einem Stützteil (31) dieser, verbunden ist.

2. Flüssigkeitsfilter nach Anspruch 1,
**dadurch gekennzeichnet**,
daß der Trommelmantel (38) als Dauerfilterelement ausgebildet ist.

3. Flüssigkeitsfilter nach Anspruch 1 oder 2,
**dadurch gekennzeichnet**,
daß der Trommelmantel (38) eine Filterfeinheit in der Größenordnung etwa von 20 Mikron bis 100 Mikron aufweist.

4. Flüssigkeitsfilter nach einem der Ansprüche 1 bis 3,
**dadurch gekennzeichnet**,
daß der Trommelmantel (38) eine Maschenweite in der Größenordnung von 20 Mikron bis 100 Mikron aufweist.

5. Flüssigkeitsfilter nach einem der Ansprüche 1 bis 4,
**dadurch gekennzeichnet**,
daß der Trommelmantel (38) aus einem zumindest in Grenzen biegesteifen Material, insbesondere aus Metall oder Kunststoff gebildet ist.

6. Flüssigkeitsfilter nach einem der Ansprüche 1 bis 5,
**dadurch gekennzeichnet**,
daß der Trommelmantel (38) aus einem Gewebe, Gestricke, Gewirke, Geflecht od.dgl. Durchlässe bildenden Teil gebildet ist.

7. Flüssigkeitsfilter nach einem der Ansprüche 1 bis 6,
**dadurch gekennzeichnet**,
daß der Trommelmantel (38) aus einer zumindest in Grenzen flexiblen Matte oder Folie gebildet ist.

8. Flüssigkeitsfilter nach einem der Ansprüche 1 bis 7,
**dadurch gekennzeichnet**,
daß der Trommelmantel (38) als Zylinderkörper die Trommel (25), insbesondere deren Stützteil (31), gänzlich umschließt und z.B. fest jedoch lösbar und auswechselbar angeordnet ist, und vorzugsweise, daß der Trommelmantel (38) durch Verspannen der Trommel 25), insbesondere des Stützteils (31), gehalten und nach außen abgedichtet ist.

9. Flüssigkeitsfilter nach einem der Ansprüche 1 bis 8,
**gekennzeichnet durch**
ein dem Trommelumfang folgendes Stützteil (31) für den Trommelmantel (38), das sich in Umfangsrichtung über den gesamten Trommelumfang erstreckt und fester Bestandteil der Trommel (25) ist und als Zylindermantel (36) ausgebildet ist.

10. Flüssigkeitsfilter nach einem der Ansprüche 1 bis 9,
**dadurch gekennzeichnet**,
daß das Stützteil (31) aus einem mit Durchlässen (37), insbesondere Löchern, Schlitzen od.dgl., versehenen Blechmantel gebildet ist.

11. Flüssigkeitsfilter nach einem der Ansprüche 1 bis 10,
**dadurch gekennzeichnet**,
daß die Trommel (25) auf beiden Axialseiten das Trommelinnere und die darin gebildete Reinkammer (34) axial abschließende Abschlußteile, z.B.Stirnwände, aufweist und gegenüber der Schmutzkammer (33) abgedichtet ist, z.B. über Lagerzapfen, Lagerringe od. dgl.

12. Flüssigkeitsfilter nach einem der Ansprüche 1 bis 11,
**dadurch gekennzeichnet**,
daß die Trommel (25) auf beiden Axialseiten Tragringe (27,28) aufweist, an denen der Trommelmantel (38) und gegebenenfalls das Stützteil (31) gehalten sind, und daß die Tragringe (27,28) in Umfangsrichtung an den axialen Trommelenden in bezug auf das Gehäuse (18) abgedichtet sind, z.B. mittels in Ringnuten (29) enthaltener Dichtungsringe (30), z.B. 0-Ringe.

13. Flüssigkeitsfilter nach einem der Ansprüche 1 bis 12,
**dadurch gekennzeichnet**,
daß das Gehäuse (18) an einem axialen Endbereich der Trommel (25) einen - vorzugsweise exzentrisch und so tief wie möglich angeordneten -Auslaß (35) aufweist, der mit der im Trommelinneren befindlichen Reinkammer (34) in Verbindung steht und der Ableitung des gefilterten Mediums aus dem Inneren der Trommel (25) nach außen, z.B. in eine Reinmediumkammer (17), dient.

14. Flüssigkeitsfilter, inbesondere für Kühl-, Schmier-, und/oder Bearbeitungsmedien für Werkzeugmaschinen, Bearbeitungszentren oder dergleichen Produktionsmaschinen, mit einem Gehäuse (18) mit Filterkammer (19), innerhalb der eine liegende Trommel (25) drehbar gehalten ist, die ein dem Trommelumfang folgendes, z.B. auswechselbares, flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist, insbesondere nach Anspruch 1,
**gekennzeichnet durch**
eine Antriebseinrichtung (40) zum kontinuierlichen oder taktweisen umlaufenden Drehantrieb der Trommel (25),

15. Flüssigkeitsfilter nach einem der Ansprüche 1 bis 14,
**dadurch gekennzeichnet**,
daß die Antriebseinrichtung (40) einen unmittelbar oder oder mittelbar an der Trommel (25) angreifenden Antriebsmotor (42) aufweist.

16. Flüssigkeitsfilter nach einem der Ansprüche 1 bis 15,
**dadurch gekennzeichnet**,
daß der Antriebsmotor (42) einen zumindest auf einer Axialseite der Trommel (25) angeordneten und zur Trommel und zurück geführten Kettenstrang (43) antreibt.

17. Flüssigkeitsfilter nach einem der Ansprüche 1 bis 16,
**dadurch gekennzeichnet**,
daß die Antriebseinrichtung (40) auf jeder Axialseite der Trommel (25) einen zur Trommel (25) und zurück geführten Kettenstrang (43,44) aufweist.

18. Flüssigkeitsfilter nach Anspruch 17,
**dadurch gekennzeichnet**,
daß beide Kettenstränge (43,44) über eine beiden gemeinsame Umlenkung, z.B. eine jeweils Kettenräder (45) tragende Welle (46), geführt sind und der Antriebsmotor (42) unmittelbar oder mittelbar an dieser Umlenkung zu deren Antrieb angreift.

19. Flüssigkeitsfilter nach einem der Ansprüche 1 bis 18,
**dadurch gekennzeichnet**,
daß zumindest ein Trum (47), insbesondere der obere Trum, des mindestens einen Kettenstranges (43) über eine Kettenumlenkung, z.B. ein umlaufendes Kettenrad, geführt ist.

20. Flüssigkeitsfilter nach einem der Ansprüche 1 bis 19,
**dadurch gekennzeichnet**,
daß die Antriebseinrichtung (40) eine Spanneinrichtung für den mindestens einen Kettenstrang (43,44) aufweist.

21. Flüssigkeitsfilter nach einem der Ansprüche 1 bis 20,
**dadurch gekennzeichnet**,
daß die Trommel (25) mittels der Antriebseinrichtung (40) gleichbleibend in einer Drehrichtung antreibbar ist.

22. Flüssigkeitsfilter nach einem der Ansprüche 1 bis 21,
**dadurch gekennzeichnet**,
daß die Antriebseinrichtung (40), insbesondere der mindestens eine Kettenstrang (43), an einem Antriebsteil (48), z.B. einem Kettenrad, einer Riemenscheibe, einem Ring od.dgl., der Trommel (25) zu deren Antrieb angreift.

23. Flüssigkeitsfilter, insbesondere für Kühl -, Schmier- und/oder Bearbeitungsmedien, z.B. für Werkzeugmaschinen, Bearbeitungszentren oder dergleichen Produktionsmaschinen, mit einem Gehäuse (18) mit Filterkammer (19), innerhalb der eine liegende Trommel (25) drehbargehaltenist, die ein dem Trommelumfang folgendes, z.B. auswechselbares, flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist, insbesondere nach Anspruch 1,
**gekennzeichnet durch**
eine die Trommel (25) zumindest auf einem Umfangswinkelbereich umgreifende Austrageinrichtung (50), mittels der sich auf der Außenfläche des Trommelmantels (38) und/oder in der Schmutzkammer (33) ablagernde Partikel von dort austragbar sind.

24. Flüssigkeitsfilter nach Anspruch 23,
**dadurch gekennzeichnet**,
daß die Austrageinrichtung (50) umlaufend angetriebene, entlang einr Zylindermantellinie des Trommelmantels (38) verlaufende Kratzer (51), z.B. Stege, Leisten, Bürsten od.dgl., aufweist, die in Berührung mit der Außenfläche des Trommelmantels (38) gebracht werden oder außer Berührung damit bleiben.

25. Flüssigkeitsfilter nach Anspruch 23 oder 24,
**dadurch gekennzeichnet,**
daß die Austrageinrichtung (50) auf beiden Axialseiten der Trommel (25) befindliche, um die Trommel (25) umgelenkte und angetriebene Tragmittel aufweist, zwischen denen sich die jeweiligen Kratzer (51) erstrecken, die endseitig an den Tragmitteln gehalten sind und in Umlaufrichtung in Abständen voneinander angeordnet sind.

26. Flüssigkeitsfilter nach einem der Ansprüche 1 bis 25,
**dadurch gekennzeichnet**,
daß als Tragmittel der Austrageinrichtung (50) die auf beiden Axialseiten der Trommel (25) verlaufenden Kettenstränge (43,44) dienen, an denen die Kratzer (51) mit ihren Enden gehalten sind.

27. Flüssigkeitsfilter nach einem der Ansprüche 1 bis 26,
**dadurch gekennzeichnet**,
daß die Filterkammer (19) im Bereich des unteren Trums des Tragmittels mit Kratzern (51), der von der Trommel (25) wegstrebt und in einem dortigen Außenbereich der Trommel (25) schräg ansteigend verläuft, eine schräg ansteigende Leitwand (52) unterhalb der Bahn der Kratzer (51) aufweist, an deren Oberseite die Kratzer (51) entlangfahren und von der Trommel (25) weg geführt sind.

28. Flüssigkeitsfilter nach Anspruch 27,
**dadurch gekennzeichnet**,
daß die Leitwand (52) aus dem Gehäuse (18) herausgeführt ist und einen endseitigen Abwurfabschnitt (53) aufweist, über den von den Kratzern (51) der Austrageinrichtung (50) abtransportierte Partikel abgebbar sind, z.B. in eine darunter befindliche Sammelkammer (39).

29. Flüssigkeitsfilter, insbesondere für Kühl-, Schmier- und/oder Bearbeitungsmedien, z.B. für Werkzeugmaschinen, Bearbeitungszentren oder dergleichen Produktionsmaschinen, mit einem Gehäuse (18) mit Filterkammer (19), innerhalb der eine liegende Trommel (25) drehbar gehalten ist, die ein dem Trommelumfang folgendes, z.B. auswechselbares, flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist, insbesondere nach Anspruch 1,
**gekennzeichnet durch**
eine an der Außenfläche des Trommelmantels (38) angreifende, sich im wesentlichen entlang einer Zylindermantellinie des Trommelmantels (38) erstreckende Abstreifeinrichtung (60), mittels der sich auf der Außenfläche des Trommelmantels (38) ablagernde Partikel beim Trommel umlauf abstreifbar sind.

30. Flüssigkeitsfilter nach Anspruch 29,
**dadurch gekennzeichnet**,
daß die Abstreifeinrichtung (60) eine etwa innerhalb einer Tangentialebene oder einer Sekantenebene zum Trommelmantel (38) verlaufende Abstreifplatte (62) mit einem endseitigen, am Trommelmantel (38) angreifenden Abstreifer (61), z.B. einer Bürste, aufweist.

31. Flüssigkeitsfilter nach einem der Ansprüche 1 bis 30,
**dadurch gekennzeichnet**,
daß die Abstreifeinrichtung (60) in dem Außenbereich der Trommel (25) angeordnet ist, in dem sich die schräg ansteigende Leitwand (52) befindet.

32. Flüssigkeitsfilter nach einem der Ansprüche 1 bis 31,
**dadurch gekennzeichnet**,
daß die Abstreifeinrichtung (60) oberhalb der Bahn der Kratzer (51) und der schräg ansteigenden Leitwand (52) angeordnet ist.

33. Flüssigkeitsfilter, insbesondere für Kühl-, Schmier- und/oder Bearbeitungsmedien, z.B. für Werkzeugmaschinen, Bearbeitungszentren oder dergleichen Produktionsmaschinen, mit einem Gehäuse (18) mit Filterkammer (19), innerhalb der eine liegende Trommel (25) drehbar gehalten ist, die ein dem Trommelumfang folgendes,z.B.auswechselbares, flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist, insbesondere nach Anspruch 1,
**dadurch gekennzeichnet**,
daß die Trommel (25) im Gehäuse (18) zur Schmutzkammer (33) hin abgedichtet ist.

34. Flüssigkeitsfilter nach einem der Ansprüche 1 bis 33,
**dadurch gekennzeichnet**,
daß die Schmutzkammer (33) im radialen Außenbereich der Trommel (25) vorgesehen ist.

35. Flüssigkeitsfilter nach einem der Ansprüche 1 bis 34,
**dadurch gekennzeichnet**,
daß die Schmutzkammer (33) durch einen Boden (24) begrenzt ist, der etwa von der Unterseite der Trommel (25) ausgeht und von dort vorzugsweise zu beiden Seiten hin schräg nach oben ansteigt.

36. Flüssigkeitsfilter nach Anspruch 35,
**dadurch gekennzeichnet**,
daß der Boden (24) mit der Leitwand (52) verbunden ist, vorzugsweise mit dieser einstückig ist.

37. Flüssigkeitsfilter, insbesondere für Kühl-, Schmier- und/oder Bearbeitungsmedien, z.B. für Werkzeugmaschinen, Bearbeitungszentren oder dergleichen Produktionsmaschinen, mit einem Gehäuse (18) mit Filterkammer (19), innerhalb der eine liegende Trommel (25) drehbar gehalten ist, die ein dem Trommelumfang folgendes, z.B. auswechselbares, flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist, insbesondere nach Anspruch 1,
**dadurch gekennzeichnet**,
daß im Inneren der Trommel (25) eine dem Trommelmantel (38) zugeordnete Reinigungseinrichtung (70) angeordnet ist, mittels der der Trommelmantel (38) von innen her zur Entfernung von darauf ablagernden Partikeln beaufschlagbar ist.

38. Flüssigkeitsfilter nach Anspruch 37,
**dadurch gekennzeichnet**,
daß die Reinigungseinrichtung (70) eine Druckmittelbeaufschlagung des Trommelmantels (38) vornimmt.

39. Flüssigkeitsfilter nach einem der Ansprüche 1 bis 38,
**dadurch gekennzeichnet**,
daß die Reinigungseinrichtung (70) mit einem Druckmittel, insbesondere Druckgas, z.B. Druckluft, und/oder einer Druckflüssigkeit, z.B. aus der Reinkammer (34) entnommenen Medium, speisbar ist.

40. Flüssigkeitsfilter nach einem der Ansprüche 1 bis 39,
**dadurch gekennzeichnet**,
daß die Reinigungseinrichtung (70) eine oder mehrere, entlang einer Zylindermantellinie des Trommelmantels (38) im Trommel inneren angeordnete Druckmittelauslaßöffnungen (76) aufweist, die der Innenfläche des Trommelmantels (38) benachbart sind.

41. Flüssigkeitsfilter nach Anspruch 40,
**gekennzeichnet durch**
einen längsverlaufenden Auslaßschlitz.

42. Flüssigkeitsfilter nach Anspruch 40,
**gekennzeichnet durch**
mehrere einzelne Auslaßschlitze.

43. Flüssigkeitsfilter nach einem der Ansprüche 40 bis 42,
**dadurch gekennzeichnet**,
daß die Druckmittelauslaßöffnungen (76) als Düsenaustrittsöffnungen ausgebildet sind.

44. FLüssigkeitsfilter nach einem der Ansprüche 1 bis 43,
**dadurch gekennzeichnet**,
daß die Reinigungseinrichtung (70) einen Düsenstock aufweist.

45. FLüssigkeitsfilter nach einem der Ansprüche 1 bis 44,
**dadurch gekennzeichnet**,
daß die Reinigungseinrichtung (70) relativ zur umlaufenden Trommel (25) feststehend angeordnet ist.

46. Flüssigkeitsfilter nach einem der Ansprüche 1 bis 45,
**dadurch gekennzeichnet**,
daß die Reinigungseinrichtung (70), insbesondere der Düsenstock, auswechselbar angeordnet ist.

47. Flüssigkeitsfilter nach Anspruch 46,
**dadurch gekennzeichnet**,
daß die Reinigungseinrichtung (70), insbesondere der Düsenstock, mittels einer Flansch- oder Schraubverbindung lösbar gehalten ist.

48. Flüssigkeitsfilter, insbesondere für Kühl-, Schmier-, und/oder Bearbeitungsmedien,z.B. für Werkzeugmaschinen, Bearbeitungszentren oder dergleichen Produktionsmaschinen, mit einem Gehäuse (18) mit Filterkammer (19), innerhalb der eine liegende Trommel (25) drehbar gehalten ist, die ein dem Trommelumfang folgendes, z.B. auswechselbares, flüssigkeitsdurchlässiges Filterelement (32) aufweist und das Innere der Filterkammer (19) in eine außerhalb der Trommel (25) befindliche Schmutzkammer (33), der das zu filternde Medium zuführbar ist, und in eine innerhalb der Trommel (25) gebildete Reinkammer (34) unterteilt, aus der über einen Auslaß (35) das gefilterte Medium ableitbar ist, insbesondere nach einem oder mehreren der vorangehenden Ansprüche,
**gekennzeichnet durch**
einen bedarfsweise in die Trommel (25) einbringbaren und an den im unteren Bereich befindlichen inneren Trommelumfang von innen her anlegbaren bzw. davon bedarfsweise abhebbaren Hohlkörper (80), der in der dem inneren Trommelumfang zugewandten Wandung (81) zumindest eine Öffnung (82) enthält und der entlang seinen Rändern gegen den inneren Trommelumfang abgedichtet ist und dazwischen zusammen mit dem inneren Trommelumfang eine Druckkammer (87) bildet, die über die mindestens eine Öffnung (82) mit dem Inneren (86) des Hohlkörpers (80) in Verbindung steht, wobei das Innere (86) des Hohlkörpers (80) über mindestens eine Leitung (88) bedarfsweise mit einer Vakuumpumpe verbindbar ist, mittels der im Inneren (86) des Hohlkörpers (80) und in der Druckkammer (87) ein Unterdruck erzeugbar ist.

49. Flüssigkeitsfilter nach Anspruch 48,
**dadurch gekennzeichnet,**
daß der Hohlkörper (80) sich über etwa 120° Umfangswinkel und etwa über die gesamte Länge der Trommel (25) erstreckt.

50. Flüssigkeitsfilter nach Anspruch 48 oder 49,
**dadurch gekennzeichnet,**
daß der Hohlkörper (80) ein Segment aufweist, das etwa einem 120°-Umfangssegment eines Hohlzylinders entspricht.

51. Flüssigkeitsfilter nach einem der Ansprüche 48 bis 50,
**dadurch gekennzeichnet,**
daß die mindestens eine Öffnung (82) aus vorzugsweise einem längsdurchlaufenden Schlitz im unteren Bereich des Hohlkörpers (80) gebildet ist.

52. Flüssigkeitsfilter nach einem der Ansprüche 48 bis 51,
**dadurch gekennzeichnet,**
daß die Trommel (25) an jedem Ende auf dem inneren Trommelumfang einen umlaufenden Dichtungsring (55), insbesondere Profilring, trägt, an dem der Hohlkörper (80) mit der zugewandten Außenseite seiner Wandung (81) anliegt.

53. Flüssigkeitsfilter nach einem der Ansprüche 48 bis 52,
**dadurch gekennzeichnet,**
daß die Trommel (25) auf ihrer Innenseite längsdurchlaufende Dichtleisten (56, 57,58) trägt, die z.B. in etwa 120° Umfangswinkelabständen aufeinanderfolgen und an denen in jeder um 120° Umfangswinkel relativ dazu gedrehten Trommelstellung der Hohlkörper (80) mit der zugewandten Außenseite seiner Wandung (81) anliegt.

54. Flüssigkeitsfilter nach einem der Ansprüche 48 bis 53,
**dadurch gekennzeichnet,**
daß der Hohlkörper (80) mittels einer Halteeinrichtung (90) in der Trommel (25) halterbar ist.

55. Flüssigkeitsfilter nach Anspruch 54,
**dadurch gekennzeichnet,**
daß die Halteeinrichtung (90) zumindest einen Längshalter (91) aufweist, der mit einem Ende lösbar an einer Stirnwand (28) der Trommel (25) halterbar ist.

56. Flüissigkeitsfilter nach Anspruch 55,
**dadurch gekennzeichnet,**
daß der Längshalter (91) eine längsverlaufende Stange (92) aufweist, die mit einem Ende in eine Aufnahme, z.B. einen Rohrstutzen (59), an der einen Stirnwand (28) einsteckbar und relativ dazu drehbar ist und die mit ihrem anderen Ende axial sicherbar ist, z.B. am Gehäuse (18) oder dergleichen.

57. Flüssigkeitsfilter nach einem der Ansprüche 48 bis 56,
**dadurch gekennzeichnet,**
daß der Hohlkörper (80) an der Halteeinrichtung (90), insbesondere am Längshalter (91), hängend gehalten ist und mittels einer Betätigungseinrichtung (95) an die Trommel (25) von innen her anpreßbar bzw. gegensinnig dazu von der Trommel (25) abhebbar ist.

58. Flüssigkeitsfilter nach Anspruch 57,
**dadurch gekennzeichnet,**
daß die Betätigungseinrichtung (95) einen am Längshalter (91), insbesondere der Stange (92) zu dessen Schwenkbetätigung angreifenden Antrieb, z.B. einen druckmittelbetriebenen Arbeitszylinder (96) mit daran angelenktem Hebel (98), sowie am Längshalter (91) sitzende Mitnehmer (99) aufweist, die an Mitnahmeflächen (100) zugeordneter Hängetragelemente (101) des Hohlkörpers (80) anliegen.

59. Flüssigkeitsfilter nach Anspruch 58,
**dadurch gekennzeichnet,**
daß die Hängetragelemente (101) des Hohlkörpers (80) aus etwa vertikal hochragenden Laschen mit darin befindlichen etwa fensterartigen Öffnungen (102) gebildet sind, deren Kanten die Mitnahmeflächen (100) bilden.

60. Flüssigkeitsfilter nach Anspruch 58 oder 59,
**dadurch gekennzeichnet,**
daß die Mitnehmer (99) aus etwa radial abstehenden, an der Stange (92) festen Fingern gebildet sind, die sich etwa innerhalb der Ebene der etwa fensterartigen Öffnungen (102) erstrecken und mit ihren Enden direkt oder über dort drehbare Rollen (103) an den Mitnahmeflächen (100), insbesondere an den Kanten der Öffnungen (102) anliegen.

61. Flüssigkeitsfilter nach einem der Ansprüche 1 bis 60,
**gekennzeichnet durch**
eine Steuereinrichtung, die ein einstellbares Kontaktunterdruckmanometer (104) aufweist, das mit dem Inneren (86) des Hohlkörpers (80) in Verbindung steht, wobei bei Erreichen eines eingestellten, über dem Betriebsdruck liegenden Druckes das Kontaktunterdruckmanometer (104) anspricht und eine Abschaltung der mit dem Hohlkörper (80) in Verbindung stehenden Vakuumpumpe bewirkt, sodann die Betätigungseinrichtung (75) zum Abheben des Hohlkörpers (80) von der inneren Umfangsfläche der Trommel (25) eingeschaltet wird, sodann die Antriebseinrichtung (40) der Trommel (25) eingeschaltet wird und mittels dieser die Trommel (25) etwa um 120° Umfangswinkel gedreht wird und während dieser Trommeldrehung die Reinigungseinrichtung (70) zur Reinigung des Filterelements (32), z.B. mittels hindurchgeblasenem Druckgas, z.B. Druckluft, und/oder Spülflüssigkeit, eingeschaltet wird und wobei nach dieser Trommeldrehung die Antriebseinrichtung (40) und die Reinigungseinrichtung (70) abgeschaltet und die Betätigungseinrichtung (95) zum Absenken des Hohlkörpers (80) und Andrücken an die innere Umfangsfläche der Trommel (25) eingeschaltet wird und hiernach die Vakuumpumpe wieder eingeschaltet wird.
